# EUROPÄISCHE PATENTSCHRIFT

(11) **EP 0 875 356 B1**
(45) Veröffentlichungstag und Bekanntmachung des Hinweises auf die Patenterteilung: **12.03.2003**
(21) Anmeldenummer: 98106553.5
(22) Anmeldetag: 09.04.1998
(51) Int. Cl.: B29C 47/40

(54) **Mehrwellen-Schneckenmaschine, insbesondere Zwei-Wellen-Extruder**
Multiple screw extruder, especially twin screw extruder
Extrudeuse multi-vis, notamment extrudeuse à deux vis

(30) Priorität: 30.04.1997 DE 19718292
(43) Veröffentlichungstag der Anmeldung: 04.11.1998
(73) Patentinhaber: Coperion Werner & Pfleiderer GmbH & Co. KG, 70469 Stuttgart (DE)
(72) Erfinder: Häring, Erwin, 70195 Stuttgart-Botnung (DE); Weihrich, Gerhard, 75428 Illingen (DE); Burkhardt, Ulrich, 70372 Stuttgart (DE)
(74) Vertreter: Rau, Manfred, Dr. Dipl.-Ing.

(56) Entgegenhaltungen:
- EP-A- 0 330 308
- DE-A- 2 145 095
- DE-A- 2 550 969
- DE-B- 1 014 735
- US-A- 4 824 256

## Beschreibung

Die Erfindung betrifft eine Mehrwellen-Schneckenmaschine und insbesondere einen Zwei-Wellen-Extruder mit den im Oberbegriff des Anspruchs 1 angegebenen Merkmalen.

Eine derartige Schneckenmaschine ist aus der DE 25 50 969 C2 bekannt. Sie ist mit auf den beiden Schneckenwellen drehfest angebrachten Knetscheiben versehen, die für eine Bearbeitung des durch die Schneckenmaschine geförderten Materials z. B. zum Homogenisieren, Mischen, Kneten, Plastifizieren u. dgl. sorgen. Je nach ihrer Gangzahl können die Knetscheiben eine linsenähnliche (2-gängige Knetscheibe), trochoidförmige (3-gängige Knetscheibe) Kontur usw. aufweisen.

In der zum Stand der Technik genannten Patentschrift sind 3-gängige Knetscheiben gezeigt, die in ihren Kammbereichen zur Ausbildung von umfangseitig gelegenen Misch- und Abstreifzapfen gegenüber der Grundbreite der Knetscheibe verschmälert sind.

Neben dem Mischen aufgrund des Kämmens der in einer gemeinsamen Axialposition nebeneinander angeordneten Knetscheiben dienen diese Zapfen zum Abstreifen des zu bearbeitenden Materials von der Gehäuseinnenwand. Dazu streichen die radial nach außen weisenden, mit einem definierten Spiel gegenüber der Gehäuseinnenwand angeordneten Dichtflächen der Zapfen über die Gehäuseinnenwand hinweg und nehmen so das sich dort ansammelnde Material mit.

Die vorbekannte Konstruktion ist dahingehend nachteilig, als die Gehäusewandung nur im voll ausgebildeten Kammbereich der Misch- und Abstreifzapfen, nicht jedoch im Bereich zwischen diesen Zapfen abgestreift wird. Das fehlende Abstreifen führt zu einer erheblichen Verminderung des Wärmetransportes von und zu der Gehäusewandung, da in den nicht erfaßten Bereichen das Verarbeitungsprodukt nicht ausgetauscht wird. Ferner findet durch die produktbedingte schlechte Wärmeleitfähigkeit ein Wärmetransport durch Konvektion nicht statt. Auch besteht durch diese Problematik die Gefahr, daß das nicht abgestreifte Material an der Gehäuseinnenwand anbäckt, was wegen der damit verbundenen großen Verweilzeiten des Produktes in diesen Zonen zu einer Schädigung des Produktes führt. Ferner werden durch das allmähliche Zusetzen des Gehäusequerschnittes die verfahrenstechnischen Eigenschaften der Schneckenmaschine negativ beeinflußt.

Aus der DE 41 22 912 A1 ist ein Doppelschneckenextruder bekannt, bei dem die sich in Umfangsrichtung erstreckenden Dichtflächen der Knetscheiben mit quer zur Achsrichtung der Schnecken verlaufenden Kanten versehen sind, die zumindest teilweise schräg zur Achse der Schnecken verlaufen. Durch diesen Schrägverlauf bleibt die Stauwirkung der Knetscheiben zwar erhalten, ihr freier Durchtrittsquerschnitt wird aber so weit vergrößert, daß für das zu verarbeitende Produkt thermisch schädliche Scherspitzen deutlich reduziert werden. Allerdings ist auch bei der in DE 41 22 912 A1 gezeigten Ausführungsform ein vollflächiges Abstreifen der Gehäuseinnenwand nicht gegeben.

Der Erfindung liegt die Aufgabe zugrunde, unter Beibehaltung der bearbeitungstechnischen Vorteile der in der Breite verringerten Misch- und Abstreifzapfen eine solche Anordnung für diese Zapfen anzugeben, daß ein vollflächiges Abstreifen der Gehäuseinnenwand erreicht wird.

Die Lösung dieser Aufgabe ist im Kennzeichnungsteil des Anspruches 1 angegeben. Demnach sind die Misch- und Abstreifzapfen an jeder Knetscheibe axial derart zueinander versetzt, daß ihre umfangsseitigen Dichtflächen gemeinsam die gesamte Scheibenbreite abdecken. Damit wird bei einer vollen Umdrehung der Knetscheibe an jeder Axialposition über ihre Breite einmal das an der Gehäusewand anstehende Material entfernt. Die eingangs genannten Nachteile zum Stand der Technik werden dadurch wirkungsvoll vermieden. Damit geht eine ausgezeichnete Mischwirkung dieser Knetscheiben mit einem vollkommenden Abstreifen der Gehäusewandung einher.

Bevorzugte Ausführungsformen sowie weitere Merkmale, Einzelheiten und Vorteile der Erfindung sind den Unteransprüchen und der nachfolgenden Beschreibung entnehmbar, in der Ausführungsbeispiele des Erfindungsgegenstandes näher erläutert sind. Es zeigen:
- Fig. 1: einen Zwei-Wellen-Extruder mit aufgebrochen dargestelltem Gehäuse in Draufsicht,
- Fig. 2: einen schematischen Schnitt durch den Extruder gemäß Schnittlinie II-II nach Fig. 1,
- Fig. 3: eine Draufsicht auf eine Knetscheibe in einer ersten Ausführungsform,
- Fig. 4: eine Seitenansicht in Axialrichtung einer Knetscheibe in einer zweiten Ausführungsform,
- Fig. 5: eine Draufsicht auf die Knetscheibe gemäß Fig. 4,
- Fig. 6 bis 8: Teilschnitte der Knetscheibe gemäß Schnittlinie VII-VII gemäß Fig. 5 mit unterschiedlichen Ausgestaltungen des Spaltgrundes,
- Fig. 9 und 10: Schnitte analog Fig. 1 einer Schneckenmaschine mit Knetscheiben in zwei weiteren Ausführungsformen sowie
- Fig. 11: eine Draufsicht auf eine der Knetscheiben gemäß Fig. 10.

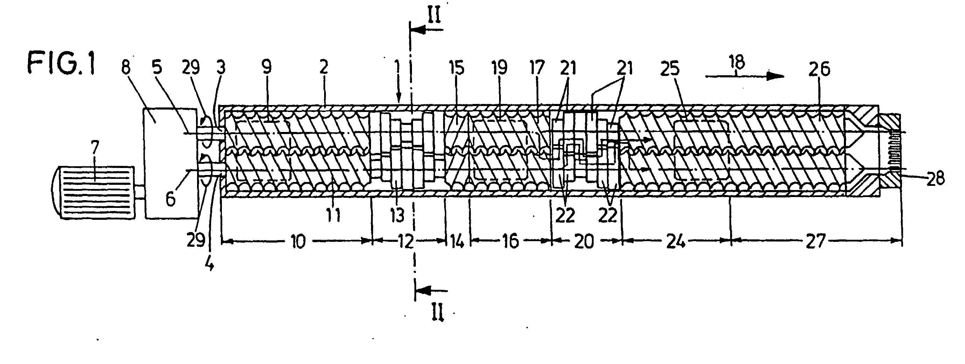

Fig. 1 zeigt einen Zwei-Wellen-Extruder 1, dessen Gehäuse 2 aufgebrochen dargestellt ist. Er weist zwei Wellen 3, 4 auf, deren Achsen 5, 6 parallel zueinander verlaufen. Der Antrieb der Wellen 3, 4 in gleichsinniger Drehrichtung 29 erfolgt mittels eines Motors 7 über ein Verzweigungsgetriebe 8. Benachbart zum Getriebe 8 ist im Gehäuse 2 ein nur angedeuteter Aufgabe-Trichter 9 für ein im Extruder 1 aufzuschmelzendes Polymer vorgesehen. Unter diesem Trichter 9 und im Anschluß daran ist eine Einzugszone 10 ausgebildet, in der auf den Wellen 3, 4 Förder-Schneckenelemente 11 angeordnet sind. Im Anschluß daran sind in einer Aufschmelzzone 12 auf den Wellen 3, 4 Knetscheiben 13 drehfest angebracht. Daran schließt sich eine Rückstauzone 14 an, in der auf den Wellen 3, 4 Rückförder-Schnecken-elemente 15 angebracht sind, die eine entgegengesetzte Schneckenwindungsrichtung wie die Förder-Schneckenelemente 11 haben. An die Rückstauzone 14 schließt sich eine Zugabezone 16 an, in der wiederum auf den Wellen 3, 4 Förder-Schneckenelemente 17 angebracht sind, die in Förderrichtung 18 des Extruders 1 fördern. Unmittelbar hinter den Rückförder-Schneckenelementen 15 mündet ein Zugabe-Trichter 19 in das Gehäuse 2, der ebenfalls nur angedeutet ist. Durch ihn werden Additive, wie z. B. Füllstoffe oder Glasfasern in die Schmelze eingegeben.

Der Zugabezone 16 schließt sich eine Mischzone 20 an, in der auf den Wellen 3, 4 Misch- und Scherelemente 21, 22 angebracht sind. Bei letzteren handelt es sich wiederum vorzugsweise um erfindungsgemäße Knetscheiben 13, die im folgenden noch näher erläutert werden. An diese Mischzone 20 schließt sich eine Entgasungszone 24 an, in der im Gehäuse 2 eine ebenfalls nur angedeutete Entgasungsöffnung 25 ausgebildet ist. In dieser Entgasungszone 24 sind auf den Wellen 3, 4 Förder-Schneckenelemente 26 angebracht, die das Polymer, in das Füll- und Verstärkungsstoffe eingemischt sind, in Förderrichtung 18 zu einer Austragszone 27 mit einer sogenannten Lochleiste als Austragsorgan 28 fördern.

Zu der Plazierung der erfindungsgemäßen Knetscheiben 13 bzw. Mischund Scherelemente 21, 22 ist festzuhalten, daß diese bevorzugt dort einzusetzen sind, wo im Verfahrensablauf in der Schneckenmaschine eine schonende Misch- und Scherwirkung erforderlich ist. Es sind dies beispielsweise Zonen, wo Füllstoffe in eine Schmelze homogen einzuarbeiten sind oder auch Zonen, wo das Produkt selbst in eine homogene Form in bezug auf Molekulargewichtsverteilung, Schmelzindex oder Temperatur gebracht werden muß. Praktisch sind die Misch- und Scherelemente (21, 22, Knetscheiben 13) je nach Anforderungsprofil an jeder beliebigen Stelle in der Schneckenmaschine einsetzbar, wobei nach den Prozeßbedingungen und Produkteigenschaften entsprechende Ausführungsformen des Elements gewählt werden können.

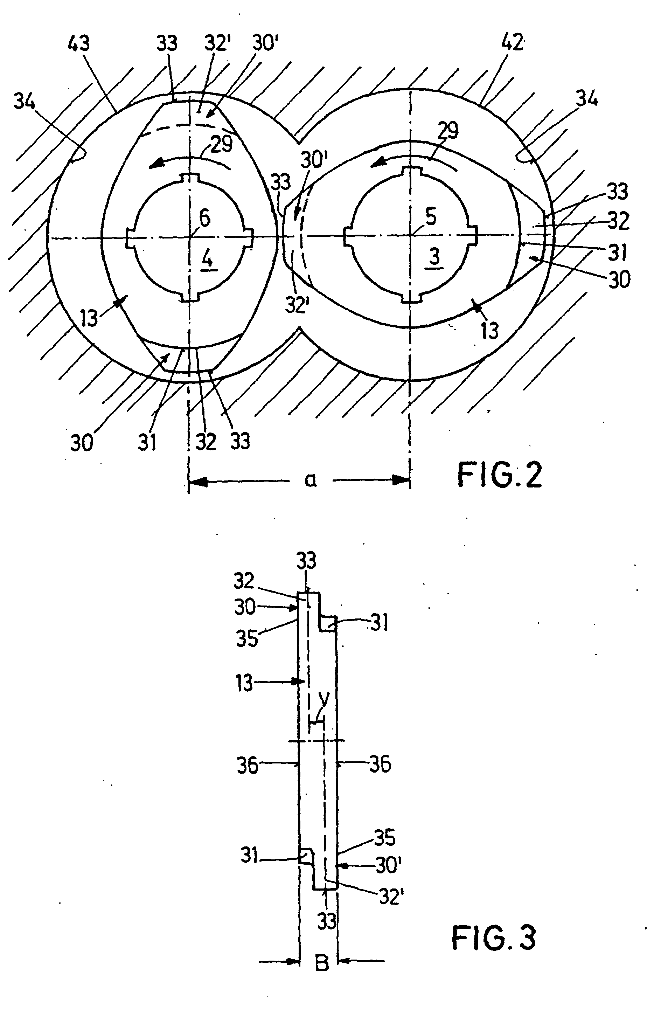

Anhand der Fig. 2 und 3 ist die Ausgestaltung der Knetscheiben 13 zu erläutern. Diese sind an einer Axialposition paarweise nebeneinander auf die Wellen 3, 4 drehfest aufgesetzt, wobei von Paar zu Paar die aufeinanderfolgenden Knetscheiben 13 auf einer Welle 3 bzw. 4 um einen definierten Winkel von z. B. 30°, 45° oder 60° zueinander versetzt sind. Da dies bei Extrudern üblich ist, ist in Fig. 2 lediglich ein Paar von Knetscheiben 13 gezeigt.

Bei diesen Knetscheiben 13 handelt es sich um 2-gängige Knetscheiben, die in Axialansicht einen im wesentlichen linsenförmigen Außenumriß aufweisen. Die radial nach außen vorspringenden Kammbereiche 30, 30' sind, wie aus Fig. 3 deutlich wird, durch radial zurückspringende Schultern 31 gegenüber der Scheibenbreite B verschmälert. Dadurch sind umfangsseitig gelegene Misch- und Abstreifzapfen 32, 32' gebildet. Diese Zapfen 32, 32' an jeder Knetscheibe sind axial derart zueinander versetzt, daß ihre umfangsseitigen Dichtflächen 33 gemeinsam die gesamte Scheibenbreite B abdecken. Somit ist für ein vollflächiges Abstreifen des im Extruder bearbeiteten Materials von der durch die Gehäusebohrungen 42, 43 gebildeten Gehäuseinnenwand 34 im Bereich der Aufschmelzzone 12 pro vollständiger Umdrehung der Welle 3 bzw. 4 gesorgt.

Wie aus Fig. 3 ferner deutlich wird, sind die beiden gegenüberliegenden Zapfen 32, 32' um einen Versatz V soweit versetzt, daß die einander abgewandten Stirnseiten 35 der Zapfen 32, 32' mit den jeweiligen Stirnseiten 36 der Knetscheibe 13 fluchten. Der Effekt eines vollständigen Abstreifens der Gehäuseinnenwand 34 wird im übrigen insbesondere dann erreicht, wenn die Gesamtbreite der Scheibenschultern 31 in einem Kammbereich (30) maximal die halbe Scheibenbreite B beträgt.

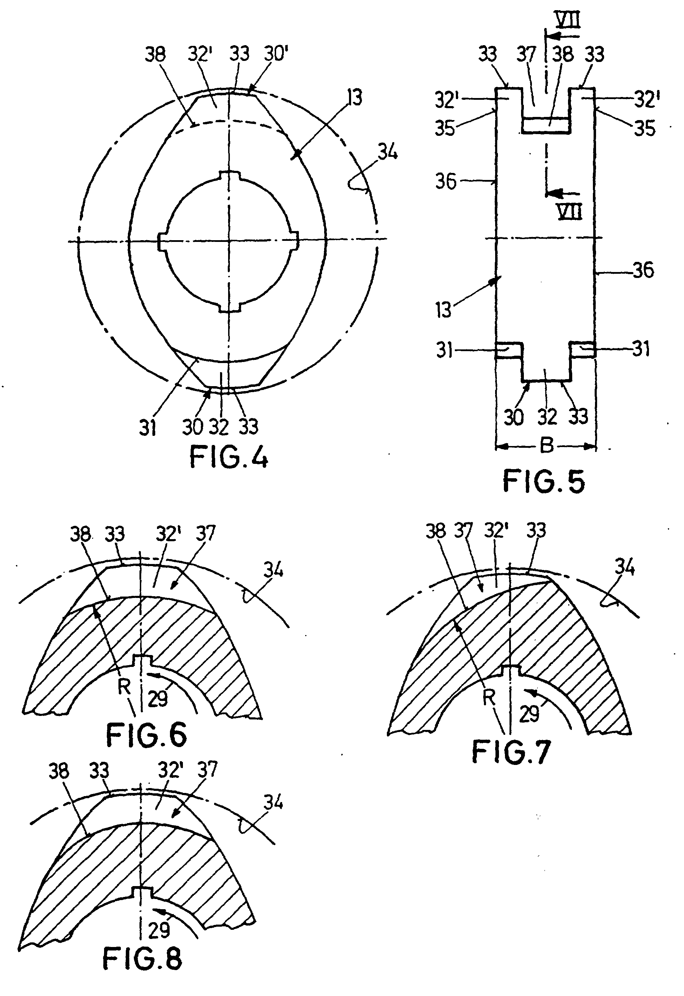

Bei der in Fig. 4 und 5 gezeigten Ausführungsform einer Knetscheibe 13 ist im einen Kammbereich 30 (unten in Fig. 4 und 5) ein durch die Schultern 31 beidseitig gegenüber der Scheibenbreite B verschmälerter Misch- und Abstreifzapfen 32 gebildet. Versetzt dazu liegen im zweiten Kammbereich 30 (oben in Fig. 4 und 5) zwei Zapfen 32', die mit ihren Stirnseiten 35 wiederum mit den Stirnseiten 36 der Knetscheibe 13 in einer Ebene liegen. Die beiden Zapfen 32' bilden zwischen sich einen Scherspalt 37, der bezogen auf die Axialrichtung mit dem gegenüberliegenden Misch- und Abstreifzapfen 32 überlappt. Die Dichtflächen 33 der drei Zapfen 32, 32' decken wiederum gemeinsam die gesamte Scheibenbreite B ab, so daß ein vollständiges Abstreifen von Material von der Gehäuseinnenwand erfolgt.

Durch die in den Fig. 4 und 5 gezeigte Ausführungsform der Knetscheiben 13 kann in vorteilhafter Weise eine Scherwirkung und eine Mischwirkung auf das zu bearbeitende Material bei gleichzeitigem Abstreifen der Gehäusewandung erreicht werden.

Der Scherspalt 37 kann je nach den verfahrenstechnischen Anforderungen unterschiedlich gestaltet werden, wie dies in den Fig. 6 bis 8 gezeigt ist. Bei der in Fig. 6 gezeigten Ausführungsform ist der Spaltgrund 38 in seiner Kontur als zur Achse 5 der Welle 3 konzentrischer Kreisbogen mit dem Radius R ausgebildet. Dadurch ergibt sich also eine in Umfangsrichtung gleichmäßige Tiefe des Scherspaltes 37. Wie bei allen anderen Ausführungsformen der Knetscheiben kann das Grundprofil der Knetscheibe auch exzentrisch zur Wellenachse angeordnet sein, wie dies bei den folgenden Darstellungen der Fall ist.

Bei der in Fig. 7 gezeigten Ausführungsform weist der Grund 38 des Scherspalts eine entgegen der Drehrichtung 29 der Welle 3 ansteigende Kontur auf, die als gegenüber der Wellenachse 5 exzentrischer Kreisbogen mit dem Radius R' ausgebildet ist.

Der Spaltgrund 38 in Fig. 8 ist mit einem von einem Kreisbogen abweichenden Konturprofil versehen.

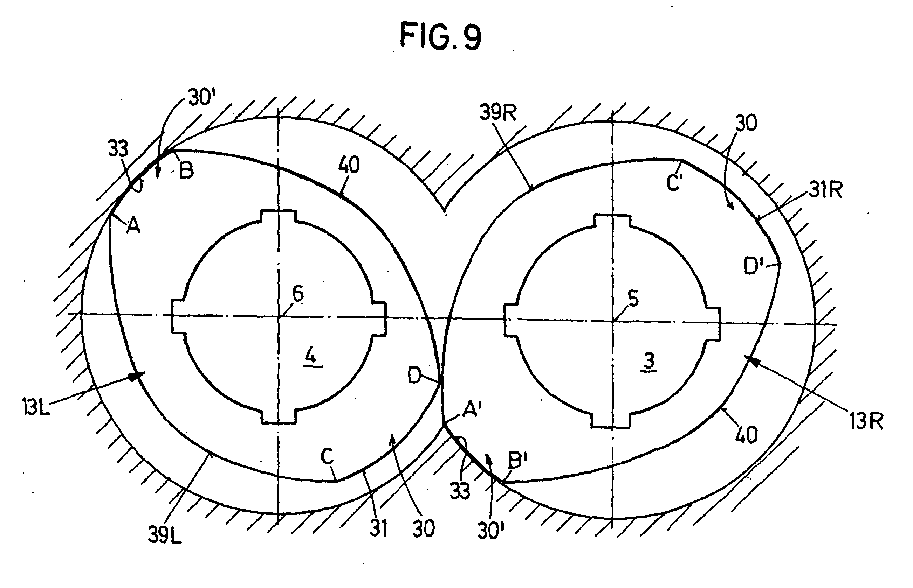

Fig. 9 zeigt eine weitere alternative Ausgestaltung der Knetscheiben 13, deren Spaltgrund nach den an sich bekannten Gesetzen für ein sogenanntes selbstreinigendes Dichtprofil für eine Mehrwellen-Schneckenmaschine mit gleicher Drehrichtung der Schneckenwellen ausgeführt ist. Hierzu ist einer radial zurückgesetzten Schulter 31 im Kammbereich 30 der linken Knetscheibe 13L (Strecke CD) eine erhabene Gegenkontur 39R an der rechten Knetscheibe 13R zugeordnet (Strecke C'A'). Die Umfangsfläche der erhabenen Gegenkontur 39R streift also mit dem üblichen Spiel an der Umfangsfläche der Schulter 31 vorbei, so daß ein gegenseitiges Abstreifen der Knetscheiben 13 und damit eine Selbstreinigung stattfinden. Gleichermaßen weist die linke Knetscheibe 13L eine erhabene Gegenkontur 39L (Strecke AC) auf, die mit der zurückgesetzten Schulter 31R des Kammbereiches 30 der rechten Knetscheibe 13R in der beschriebenen Weise kooperiert.

Die den erhabenen Gegenkonturen 39 gegenüberliegenden Flanken 40 (Strecken BD bzw. B'D') weisen eine weniger weit in radialer Richtung vorspringende Kontur auf, die mit der Dichtfläche 33 (Strecke AB bzw. A'B') der wechselseitig gegenüberliegenden Knetscheibe 13 zusammenwirkt.

Bei der in Fig. 9 gezeigten Knetscheibenkombination wird also durch eine Profilkorrektur neben einem Abstreifen der Gehäusewand eine Selbstreinigung des Profils erreicht.

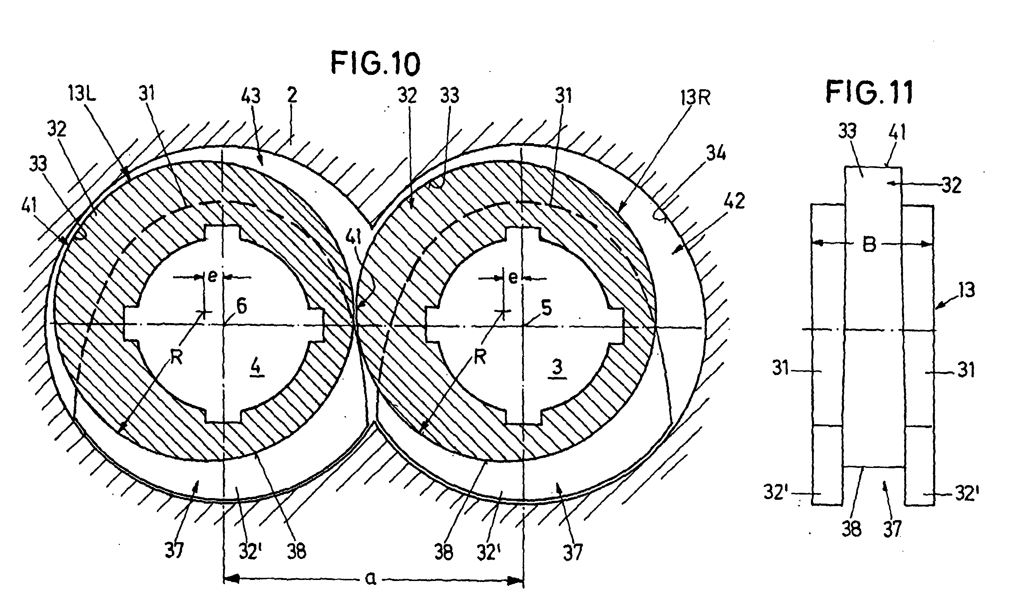

Derselbe Effekt kann auf andere Weise bei dem in Fig. 10 und 11 gezeigten Profil von Knetscheiben 13 erzielt werden. Hier ist wiederum eine Ausgestaltung mit Misch- und Abstreifzapfen 32 und gegenüberliegendem Scherspalt 37 vorgesehen. Die Dichtfläche 33 des Zapfens 32 und der Spaltgrund 38 des Scherspalts 37 werden gemeinsam durch eine im Profil kreisförmige Kontur erzeugt, wie dies anhand der schraffierten Kreisflächen in Fig. 10 verdeutlicht wird. Der Durchmesser 2R dieses Kreisprofils entspricht dem Abstand a der beiden Achsen 5, 6 des Extruders 1. Ihre Exzentrizität e ist so ausgelegt, daß die Dichtfläche 33 mit ihrem Zenit 41 die Gehäuseinnenwand 34 abstreift. Der Scherspalt 37 ist von zwei eine kreisbogenförmige Kontur aufweisenden Zapfen 32' begrenzt. An diesen Kreisbogen schließt sich jeweils eine etwa parabelförmige Kontur an, die die Schultern 31 zu beiden Seiten des Misch- und Abstreifzapfens 32 ausbildet. Durch ein wechselseitiges Eingreifen des Zapfens 32 der einen Knetscheibe 13L in den Scherspalt 37 der anderen Knetscheibe 13R wird eine Selbstreinigung des Profils erreicht. Durch den Versatz der Zapfen 32 und 32' wird wiederum erreicht, daß die Gehäuseinnenwand 34 über die gesamte Scheibenbreite B bei einer vollen Umdrehung der Knetscheiben 13 abgestreift wird.

Es ist darauf hinzuweisen, daß die vorstehenden Ausführungsbeispiele eingängige Knetscheiben zeigen. Durch Vervielfachung der entsprechenden Knetscheibenprofile können die Knetscheiben allerdings auch mehrgängig ausgeführt sein.

Ferner können mehrere Knetscheiben auch unterschiedlicher Ausführungsformen, wie sie vorstehend gezeigt sind, und mit sich ändernden Versatzwinkeln in einer Mischzone kombiniert werden.

## Patentansprüche

1. Mehrwellen-Schneckenmaschine, insbesondere Zwei-Wellen-Extruder
- mit einem Gehäuse (2),
- mit mehreren, vorzugsweise zwei zueinander parallelen, einander teilweise durchdringenden Gehäusebohrungen (42, 43),
- mit mehreren, vorzugsweise zwei in den Gehäusebohrungen (42, 43) angeordneten, vorzugsweise gleichsinnig drehantreibbaren Wellen (3, 4),
- mit auf den Wellen (3, 4) drehfest angebrachten Schneckenelementen (11, 17, 23, 26) und
- mit auf den Wellen (3, 4) drehfest angebrachten, miteinander kämmenden Knetscheiben (13), die jeweils in ihren Kammbereichen (30, 30') zur Ausbildung von umfangsseitig gelegenen Misch - und Abstreifzapfen (32) gegenüber der Scheibenbreite (B) verschmälert sind,
**dadurch gekennzeichnet,**
**daß** die Misch- und Abstreifzapfen (32, 32') an jeder Knetscheibe (13) axial derart zueinander versetzt sind, daß ihre umfangsseitigen Dichtflächen (33) gemeinsam die gesamte Scheibenbreite (B) abdecken.

2. Schneckenmaschine nach Anspruch 1, **dadurch gekennzeichnet, daß** die Misch- und Abstreifzapfen (32, 32') einer Knetscheibe (13) zueinander so in axialer Richtung versetzt sind, daß ihre einander abgewandten Stirnseiten (35) mit den jeweiligen Scheiben-Stirnseiten (36) fluchten.

3. Schneckenmaschine nach Anspruch 1 oder 2, **dadurch gekennzeichnet, daß** an einer Knetscheibe (13) in einem Kammbereich (30') angeordnete, in Axialrichtung nach außen versetzte Misch- und Abstreifzapfen (32'), die zwischen sich einen Scherspalt (37) bilden, und ein im zweiten Kammbereich (30) angeordneter, mit dem Scherspalt (37) überlappender Misch- und Abstreifzapfen (32) kombiniert sind.

4. Schneckenmaschine nach Anspruch 3, **dadurch gekennzeichnet, daß** der Grund (38) des Scherspaltes (37) eine entgegen der Drehrichtung (29) der Welle (3, 4) ansteigende Kontur aufweist.

5. Schneckenmaschine nach einem der Ansprüche 1 bis 4, **dadurch gekennzeichnet, daß** die die Misch- und Abstreifzapfen (32) flankierenden Scheibenschultern (31) der Knetscheiben (13) zur Anpassung an verfahrenstechnische Anforderungen in der Schneckenmaschine eine von der Kreisform abweichende Kontur aufweisen.

6. Schneckenmaschine nach einem der Ansprüche 1 bis 5, **gekennzeichnet durch** eine erhabene Gegenkontur (39) an den zwischen zwei Misch- und Abstreifzapfen (32, 32') liegenden Scheibenflanken, welche Gegenkontur (39) der reduzierten Kontur der Scheibenschultern (31) und/oder des Spaltgrundes (38) eines Scherspaltes (37) der damit kämmenden Knetscheibe (13) entspricht.

7. Schneckenmaschine nach einem der Ansprüche 1 bis 6, **dadurch gekennzeichnet, daß** die Außenkontur des Misch- und Abstreifzapfens (32) und die Kontur des Spaltgrundes (38) des dem Zapfen (32) gegenüberliegenden Scherspaltes (37) einer Knetscheibe (13) durch eine in Umfangsrichtung kontinuierliche, exzentrische Kreiskontur gebildet ist, deren Durchmesser gleich dem Achsabstand (a) der beiden Wellen (3, 4) ist und deren Exzentrizität (e) so ausgelegt ist, daß die Misch- und Abstreifzapfen (32) die Gehäusewand (34) bei der Wellenrotation tangieren.

8. Schneckenmaschine nach einem der Ansprüche 1 bis 7, **dadurch gekennzeichnet, daß** die Gesamtbreite der einen Misch- und Abstreifzapfen (32) flankierenden Scheibenschultern (31) maximal die halbe Scheibenbreite (B) beträgt.

9. Schneckenmaschine nach einem der Ansprüche 1 bis 8, **dadurch gekennzeichnet, daß** das Grundprofil der Knetscheibe mehrgängig ist.

10. Schneckenmaschine nach einem der Ansprüche 1 bis 9, **dadurch gekennzeichnet, daß** das Grundprofil der Knetscheiben (13) exzentrisch zur Wellenachse angeordnet ist.

11. Schneckenmaschine nach einem der Ansprüche 1 bis 10, **dadurch gekennzeichnet, daß** mehrere Knetscheiben (13) unterschiedlicher Ausführungsformen und Versatzwinkel in einer Mischzone kombiniert sind.

12. Schneckenmaschine nach einem der Ansprüche 1 bis 11, **dadurch gekennzeichnet, daß** bei Einsatz mehrerer zueinander versetzter Knetscheiben (13) die Versatzrichtung nach rechts oder links weist.

## Claims

1. A multi-shaft screw-type extruder, in particular a twin-shaft extruder, comprising
- a casing (2),
- several, preferably two, parallel and partially intersecting casing bores (42, 43),
- several, preferably two, shafts (3, 4) disposed in the casing bores (42, 43) and preferably drivable to rotate in the same direction,
- screw elements (11, 17, 23, 26) non-rotatably mounted on the shafts (3, 4), and
- intermeshing kneading disks (13), which are non-rotatably mounted on the shafts (3, 4) and the respective crest portions (30, 30') of which are reduced in relation to the disk width (B) for mixing and scraping studs (32) to form, which are located on the periphery,
**characterized in that**
the mixing and scraping studs (32, 32') on each kneading disk (13) are misaligned in the axial direction such that peripheral faying surfaces (33) jointly cover the entire disk width (B).

2. A screw-type extruder according to claim 1, **characterized in that** the mixing and scraping studs (32, 32') of a kneading disk (13) are misaligned relative to each other in the axial direction such that their fronts (35), turned away from each other, are flush with the respective disk fronts (36).

3. A screw-type extruder according to claim 1 or 2, **characterized in that** mixing and scraping studs (32'), which are disposed on a kneading disk (13) in a crest portion (30') and which are misaligned outwards in the axial direction and which, between themselves, form a shear clearance (37), are combined with a mixing and scraping stud (32), which is disposed in the second crest portion (30) and which overlaps the shear clearance (37).

4. A screw-type extruder according to claim 3, **characterized in that** the bottom (38) of the shear clearance (37) has a contour which ascends counter to the direction of rotation (29) of the shaft (3, 4).

5. A screw-type extruder according to one of claims 1 to 4, **characterized in that** the kneading disk (13) shoulders (31) flanking the mixing and scraping studs (32) have a contour which deviates from the circular shape to comply with requirements in terms of process technology.

6. A screw-type extruder according to one of claims 1 to 5, **characterized by** a counter-convexity (39) on the disk flanks situated between two mixing and scraping studs (32, 32'), this counter-convexity (39) corresponding to the reduced contour of the disk shoulders (31) and/or of the bottom (38) of the shear clearance (37) of the kneading disk (13) meshing the latter.

7. A screw-type extruder according to one of claims 1 to 6, **characterized in that** the external contour of the mixing and scraping stud (32) and the contour of the bottom (38) of the shear clearance (37), opposite the stud (32), of a kneading disk (13) is formed by an eccentric circular contour which is continuous in the peripheral direction and the diameter of which is equal to the axial distance (a) of the two shafts (3, 4) and the eccentricity (e) of which is such that the mixing and scraping studs (32) touch the casing wall (34) upon shaft rotation.

8. A screw-type extruder according to one of claims 1 to 7, **characterized in that** the total width of the disk shoulders (31) flanking a mixing and scraping stud (32) amounts to half the disk width (B) maximally.

9. A screw-type extruder according to one of claims 1 to 8, **characterized in that** basic contour of the kneading disk is a multi-flight contour.

10. A screw-type extruder according to one of the claims 1 to 9, **characterized in that** the basic contour of the kneading disks (13) is disposed eccentrically to the shaft axis.

11. A screw-type extruder according to one of claims 1 to 10, **characterized in that** several kneading disks (13) of varying embodiments and angles of misalignment are combined in a mixing zone.

12. A screw-type extruder according to one of claims 1 to 11, **characterized in that** the direction of misalignment reaches to the right or to the left when several kneading disks (13) are used that are misaligned relative to each other.

## Revendications

1. Extrudeuse multi-vis, notamment extrudeuse à deux vis
- avec un carter (2),
- avec plusieurs alésages de carter (42, 43), de préférence deux parallèles l'un par rapport à l'autre, pénétrant partiellement l'un dans l'autre,
- avec plusieurs vis (3, 4), de préférence deux disposées dans les alésages de carter (42, 43), pouvant être entraînées en rotation de préférence dans le même sens,
- avec des éléments de vis sans fin (11, 17, 23, 26) montés sur les vis (3, 4) de manière à résister à la torsion et
- avec des disques de malaxage (13) montés de manière à résister à la torsion sur les vis (3, 4), s'engageant les uns dans les autres à la manière de peignes, qui s'amincissent par rapport à la largeur des disques (B) dans leurs zones de peignage (30, 30') respectives pour former des tourillons de mélange et de raclage (32) montés du côté de la périphérie,
**caractérisée en ce que**
les tourillons de mélange et de raclage (32, 32') sont décalés dans le sens axial les uns par rapport aux autres, sur chaque disque de malaxage (13), de manière à ce que leurs surfaces d'étanchéité du côté de la périphérie (33) recouvrent ensemble toute la largeur du disque (B).

2. Extrudeuse selon la revendication 1, **caractérisée en ce que** les tourillons de mélange et de raclage (32, 32') d'un disque de malaxage (13) sont décalés dans le sens axial les uns par rapport aux autres de manière à ce que leurs côtés frontaux (35) tournés à l'inverse l'un de l'autre soient alignés sur les côtés frontaux des disques respectifs (36).

3. Extrudeuse selon la revendication 1 ou 2, **caractérisée en ce que** des tourillons de mélange et de raclage (32') disposés sur un disque de malaxage (13) dans une zone de peignage (30'), décalés vers l'extérieur dans le sens axial, qui forment entre eux une fente de cisaillement (37), et un tourillon de mélange et de raclage (32), disposé dans une deuxième zone de peignage (30), chevauchant la fente de cisaillement (37), sont combinés.

4. Extrudeuse selon la revendication 3, **caractérisée en ce que** le fond (38) de la fente de cisaillement (37) présente un contour remontant à l'inverse du sens de rotation (29) de la vis (3, 4).

5. Extrudeuse selon l'une des revendications 1 à 4, **caractérisée en ce que** les épaulements de disques (31) des disques de malaxage (13) flanquant les tourillons de mélange et de raclage (32) présentent un contour s'écartant de la forme circulaire dans l'extrudeuse pour l'adaptation aux exigences d'exploitation technique.

6. Extrudeuse selon l'une des revendications 1 à 5, **caractérisée par** un contour opposé (39) surélevé sur les flancs de disques placés entre deux tourillons de mélange et de raclage (32, 32'), lequel contour opposé (39) correspond au contour réduit des épaulements de disques (31) et/ou du fond de fente (38) d'une fente de cisaillement (37) du disque de malaxage (13) s'engageant dedans à la manière d'un peigne.

7. Extrudeuse selon l'une des revendications 1 à 6, **caractérisée en ce que** le contour extérieur du tourillon de mélange et de raclage (32) et le contour du fond de fente (38) de la fente de cisaillement (37) d'un disque de malaxage (13) opposée au tourillon (32) sont formés par un contour circulaire excentrique continu dans le sens périphérique, dont le diamètre est identique à l'entraxe (a) des deux vis (3, 4) et dont l'excentricité (e) est conçue de telle manière que les tourillons de mélange et de raclage (32) sont tangents à la paroi du carter (34) pendant la rotation des vis.

8. Extrudeuse selon l'une des revendications 1 à 7, **caractérisée en ce que** la largeur totale des épaulements de disques (31) flanquant un tourillon de mélange et de raclage (32) fait au maximum la demi-largeur de disque (B).

9. Extrudeuse selon l'une des revendications 1 à 8, **caractérisée en ce que** le profil de base du disque de malaxage comporte des filetages multiples.

10. Extrudeuse selon l'une des revendications 1 à 9, **caractérisée en ce que** le profil de base des disques de malaxage (13) est disposé de manière excentrique par rapport à l'axe des vis.

11. Extrudeuse selon l'une des revendications 1 à 10, **caractérisée en ce que** plusieurs disques de malaxage (13) ayant des formes de construction et des angles de décalage sont combinés dans une zone de mélange.

12. Extrudeuse selon l'une des revendications 1 à 11, **caractérisée en ce que,** en cas d'utilisation de plusieurs disques de malaxage (13) décalés les uns par rapport aux autres, la direction de décalage est orientée vers la droite ou vers la gauche.
